# EUROPÄISCHE PATENTSCHRIFT

(11) **EP 1 468 235 B1**
(45) Veröffentlichungstag und Bekanntmachung des Hinweises auf die Patenterteilung: **07.05.2008**
(21) Anmeldenummer: 03704407.0
(22) Anmeldetag: 16.01.2003
(51) Int. Cl.: F28D 1/03

(54) **GESCHWEISSTES MEHRKAMMERROHR**
WELDED MULTI-CHAMBER TUBE
TUBE A PLUSIEURS CHAMBRES SOUDE

(30) Priorität: 17.01.2002 DE 10201511
(43) Veröffentlichungstag der Anmeldung: 20.10.2004
(73) Patentinhaber: Behr GmbH & Co. KG, 70469 Stuttgart (DE)
(72) Erfinder: WERNER, Helms, 73730 Esslingen (DE); VOLKER, Kurz, 70499 Stuttgart (DE)
(74) Vertreter: Bendel, Christian
(86) Internationale Anmeldenummer: PCT/EP2003/000403
(87) Internationale Veröffentlichungsnummer: WO 2003/060412

(56) Entgegenhaltungen:
- EP-A- 0 302 232
- EP-A- 0 829 316
- DE-A- 19 820 937
- FR-A- 2 757 258
- US-A- 2 573 161
- PATENT ABSTRACTS OF JAPAN vol. 2000, no. 19, 5. Juni 2001 (2001-06-05) -& JP 2001 050677 A (ZEXEL VALEO CLIMATE CONTROL CORP), 23. Februar 2001 (2001-02-23)

## Beschreibung

Die Erfindung bezieht sich auf ein aus einem Flachband hergestelltes, längsseitig verschweißtes Mehrkammerflachrohr nach dem Oberbegriff des Patentanspruches 1. Ein solches Mehrkammerflachrohr wurde durch die FR 2 757 258 A1 bekannt.

Ein bekanntes Flachrohr wird aus einem Blechstreifen bzw. Flachband hergestellt, wobei zunächst Sicken in das Flachband eingeprägt werden, und zwar über dessen gesamte Breite, d. h. in beide Flachbandhälften. Die Sicken werden anschließend in gefaltete Stege umgeformt, so daß die beiden Schenkel der Stege eng aneinander anliegen. Das Rohr wird dann etwa in der Mitte gefaltet, so daß die beiden Bandhälften aneinander zu liegen kommen, wobei die Stege versetzt gegeneinander angeordnet sind. Die aneinanderstoßenden Längsränder der beiden Bandhälften werden dann mittels einer Längsnaht miteinander verschweißt, so daß ein geschlossener Querschnitt entsteht. Schließlich wird das Rohr, dessen Bandmaterial lotplatiert ist, verlötet, so daß die Rücken der Stege mit der gegenüberliegenden Rohrwand eine Lötverbindung bilden. Auf der Außenseite der Flachrohre sind sogenannte Wellrippen angeordnet, die mit den Flachrohren verlötet werden und damit das Netz eines Wärmetauschers bilden.

In einer weiteren Ausführungsform der EP-A 0 457 470 sind die Stege nicht gegeneinander versetzt, sondern einander gegenüberliegend angeordnet, sie erstrecken sich allerdings nur über die Hälfte der Rohrdicke und stoßen in der Mitte aufeinander. Das Falten der Stege aus beiden Bandhälften bzw. beiden Längsseiten führt beim Herstellungsprozeß zu Toleranzproblemen, was u. a. die Lage der Schweißnaht ungünstig beeinflussen kann.

Es ist daher Aufgabe der vorliegenden Erfindung, das gattungsgemäße Mehrkammerrohr dahingehend zu verbessern, daß es bei geringer Wandstärke und hinreichender Druckstabilität prozesssicher herstellbar und in einen Wärmetauscher einsetzbar ist, d. h. insbesondere im Hinblick auf den Löt- und den Schweißprozess.

Diese Aufgabe wird für das gattungsgemäße Mehrkammerflachrohr durch die kennzeichnenden Merkmale des Patentanspruches 1 gelöst. Die Umformung des Materials zu Sicken bzw. gefalteten Stegen erfolgt nur auf einer Flachbandhälfte, während die andere Flachbandhälfte glatt bleibt. Dies ergibt eine verbesserte Lagekontrolle und Ausformbarkeit der Sicken und darüber hinaus auch eine bessere Lagekontrolle der Schweißnaht im Bereich der Schmalseite des Flachrohres. Die Form des Rohres und die Lage der Schweißnaht können während des Schweißprozesses gut kontrolliert werden, was die Prozesssicherheit bei der Herstellung des Rohres erhöht. Gemäß der Erfindung weist dieses Rohr eine asymmetrische Aufweitung des Rohrendes auf, was bei den herkömmlichen Faltrohren nicht ohne weiteres möglich ist.

Gemäß einer vorteilhaften Weiterbildung der Erfindung ist die Lage der Schweißnaht im Bereich der Schmalseite variabel, d. h. sie kann entweder oberhalb des Scheitelpunktes der Krümmung oder unterhalb des Scheitelpunktes angeordnet sein. Hierdurch kann der Schweißvorgang besser beherrscht werden.

Nach einer vorteilhaften Weiterbildung der Erfindung kann die Wandstärke dieses Mehrkammerflachrohres bis auf unter 0,25 mm reduziert werden, was einerseits eine Kosteneinsparung und andererseits eine Leistungssteigerung für den mit diesem Rohr ausgerüsteten Wärmetauscher bedeutet.

Nach einer vorteilhaften Weiterbildung liegt die Dicke dieses Flachrohres unter 2 mm, was einen besonders niedrigen Druckabfall auf der Luftseite, also der Außenseite, dieses Rohres bedeutet. Vorteilhafterweise kann ein solches Rohr beispielsweise für einen luftgekühlten einreihigen Kühlmittelkühler für Kraftfahrzeuge eingesetzt werden.

Ein Ausführungsbeispiel der Erfindung ist in der Zeichnung dargestellt und wird im Folgenden näher beschrieben. Es zeigen:
- **Fig. 1**: ein Mehrkammerflachrohr im Querschnitt
- **Fig.2**: ein asymmetrisch aufgeweitetes Rohrende eines Mehrkammerflachrohres und
- **Fig. 2a, 2b**: eine perspektivische Ansicht des Mehrkammerflachrohres gemäß Fig. 2.

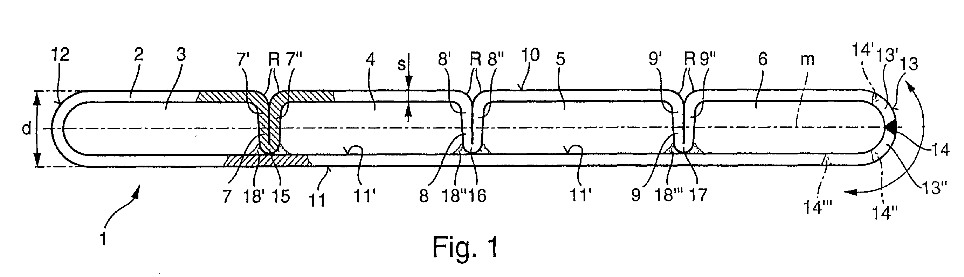

**Fig. 1** zeigt ein Mehrkammerflachrohr 1 im Querschnitt, welches aus einem Flachbandstreifen 2 hergestellt ist. Dieses Flachband besteht vorzugsweise aus einer beidseitig lotplattierten Aluminiumlegierung. Das Mehrkammerrohr 1 weist vier Kammern 3, 4, 5, 6 auf, die durch drei Stege 7, 8, 9 voneinander abgeteilt sind. Das Flachrohr 1 weist eine obere Längsseite 10 und eine untere Längsseite 11 auf sowie eine linke gekrümmte Schmalseite 12 und eine rechte ebenfalls gekrümmte Schmalseite 13. Das Flachband 2 weist zwei Ränder 13' und 13" auf, die an der Schmalseite 13 stumpf aufeinander stoßen und dort mittels einer Längsschweißnaht 14 dicht verbunden sind.

Die Stege 7, 8, 9 werden durch einen aus dem Stand der Technik bekannten Faltprozeß hergestellt, d. h. jeder Steg besteht aus zwei Schenkeln 7', 7", 8', 8", 9', 9" sowie aus einem die beiden Schenkel verbindenden Stegrücken 15, 16, 17. Alle drei Stege 7, 8, 9 sind aus der Längswand 10, d. h. der oberen Hälfte des Flachbandes 2 gefaltet, d. h. sie ragen alle von der oberen Längswand 10 in Richtung der unteren Längswand 11, wo deren Stegrücken 15, 16, 17 mittels einer Lotverbindung 18', 18", 18"' mit der Innenwand 11' der unteren Längswand 11 dicht und fest verbunden sind. Die Stege erfüllen somit drei Funktionen:
1) nehmen sie die aus dem Innendruck resultierenden Kräfte auf und wirken einer Deformation des Flachrohres entgegen (Zuganker);
2) teilen sie den Gesamtquerschnitt des Flachrohres in einzelne Kammern ab (Verkleinerung des hydraulischen Durchmessers) und
3) leiten sie die Wärme von innen nach außen ab.

Das Flachband weist vorzugsweise eine Wandstärke von s ≈ 0,25 mm auf, und die Dicke d des Flachrohres beträgt d ≈ 1,8 mm. Auf der Außenseite der Längsseite 10 ergeben sich durch die gefalteten Stege Biegeradien R, die allerdings so klein wie möglich gehalten sind. Auf Grund der geringen Wandstärke s ist dies ohne weiteres möglich. Somit ergibt sich auch auf der Längsseite 10 eine ziemlich glatte Oberfläche, so daß auch eine lückenlose Verlötung mit einer hier in der Zeichnung nicht dargestellten Wellrippe gewährleistet ist. Der durch die Radien R verbleibende Zwickel wird ohne weiteres beim Lötprozeß mit Lot gefüllt.

Wie bereits erwähnt, werden die Stege nur aus einer Hälfte des Flachbandes 2 herausgeformt, d. h. die andere Bandhälfte bleibt glatt. Auf Grund dieser einseitigen Anordnung der gefalteten Stege läßt sich die Lage der Schweißnaht während des Fertigungsprozesses wesentlich besser kontrollieren und auch variieren. Die verschiedenen möglichen Lagen der Schweißnaht 14 sind durch weitere Schweißnähte 14', 14", 14"' angedeutet. Dies ergibt sich dann, wenn während des Fertigungsprozesses die Längsränder 13', 13" nicht genau im Scheitelpunkt der Schmalseite 13, also auf der Mittellinie m zusammentreffen. Mittels der glatten Bandhälfte, d. h. der Längsseite 11 kann dann relativ einfach eine Korrektur vorgenommen werden.

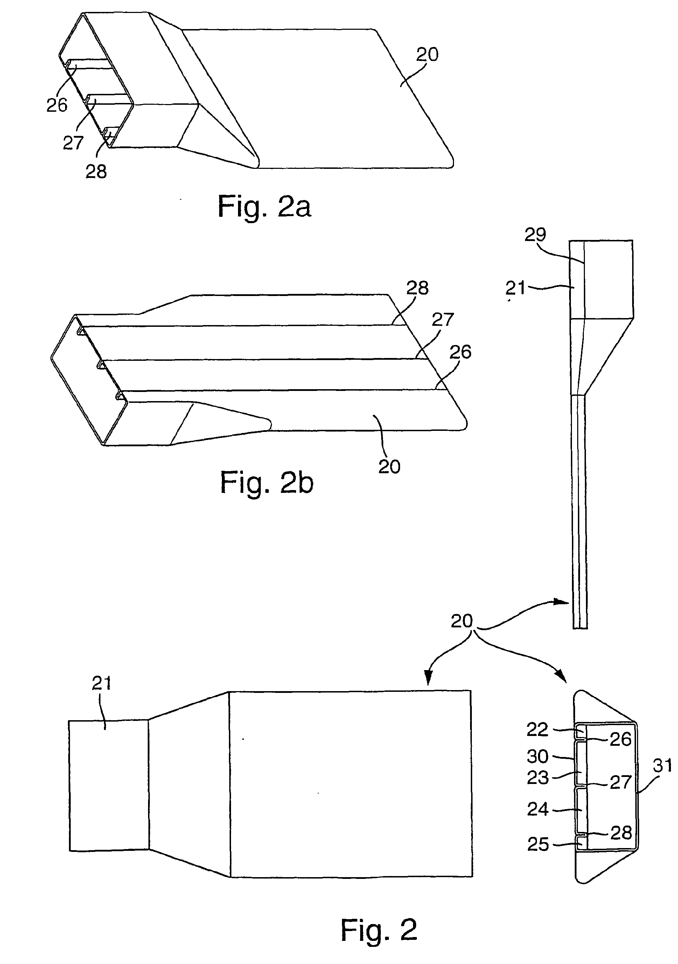

**Fig. 2** zeigt ein Mehrkammerrohr 20, dessen Rohrende 21 asymmetrisch, d. h. nur nach einer Seite hin, aufgeweitet ist. Eine solche asymmetrische Rohrendaufweitung ist aus der DE-A 198 20 937 der Anmelderin bekannt. Diese Rohrendaufweitung dient dem Zweck, die Rohrenden längsseitig miteinander zu verlöten, so daß auf einen herkömmlichen Rohrboden verzichtet werden kann.

Der Querschnitt des Mehrkammerrohres 20 ist in der unteren Draufsicht deutlich erkennbar: er besteht aus vier Kammern 22, 23, 24, 25, die durch drei gefaltete Stege 26, 27, 28 abgeteilt werden. Dieses Mehrkammerrohr 20 ist - ebenso wie das oben beschriebene Ausführungsbeispiel - aus einem Flachband hergestellt und mittels einer Längsnaht 29 verschweißt. Dadurch, daß die Stege 26, 27, 28 nur aus einer Längsseite, nämlich der linken Längsseite 30 ausgeformt sind, kann die gegenüberliegende Längsseite 31 im Bereich des Rohrendes 21 leicht nach außen geformt, d. h. aufgeweitet werden. Damit wird erreicht, daß die Bauweise nach der DE-A 198 20 937 auch für Mehrkammerrohre, d. h. dünnwandige, leistungsstarke Rohre anwendbar ist.

Die **Fig. 2a** und **Fig. 2b** zeigen perspektivische Ansichten des Mehrkammerflachrohres 20 mit den Stegen 26, 27, 28.

## Patentansprüche

1. Aus einem Flachband (2) hergestelltes Mehrkammerrohr (1) mit zwei flachen Längsseiten (10, 11) und zwei gekrümmten Schmalseiten (12, 13) und mit aus dem Flachband (1) gefaltete Stegen (7, 8, 9), die benachbarte Kammern (3, 4, 5, 6) abteilen und mit der Rohrinnenwand (11') verlötet sind, wobei die Stege (7, 8, 9) nur aus einer Längsseite (10) des Mehrkammerrohres (1) geformt sind und die andere Längsseite (11) im Wesentlichen glatt ausgebildet ist, **dadurch gekennzeichnet, dass** das Mehrkammerrohr (20) längsseitig verschweißt und endseitig (21) asymmetrisch aufgeweitet ist, wobei die Längsseite (30) mit den gefalteten Stegen (26, 27, 28) im Bereich des Rohrendes im Wesentlichen unverformt bleibt,
und wobei eine Längsschweißnaht (14) im Bereich einer Schmalseite (13) angeordnet ist.

2. Mehrkammerrohr nach Anspruch 1, **dadurch gekennzeichnet, dass** die Lage (14', 14", 14"') der Längsschweißnaht variabel ist.

3. Mehrkammerrohr nach Anspruch 1 oder 2, **dadurch gekennzeichnet, dass** das Rohr (1) eine Wandstärke von s ≤ 0,5 mm, insbesondere s ≤ 0,25 mm aufweist.

4. Mehrkammerrohr nach Anspruch 1, 2 oder 3, **dadurch gekennzeichnet, dass** das Rohr eine Dicke (Außenmaß) von d ≤ 2,0 mm aufweist.

5. Mit einem Mehrkammerrohr nach einem der vorhergehenden Ansprüche ausgerüsteter Wärmetauscher.

## Claims

1. Multichamber tube (1) being manufactured from a flat ribbon (2), with two flat longitudinal sides (10, 11) and two curved narrow sides (12, 13), and with webs (7, 8, 9) being folded from the flat ribbon, said webs partitioning off adjacent chambers (3, 4, 5, 6) and being soldered with the inner tube wall (11'), said webs (7, 8, 9) being formed from just one longitudinal side (10) of the multichamber tube (1) and the other longitudinal side (11) being formed essentially flat, **characterized in that** the multichamber tube (20) is welded longitudinally and is asymmetrically expanded at the end (21), wherein the longitudinal side (30) with the folded webs (26, 27, 28) remains essentially undeformed in the tube end region, and wherein a longitudinal weld seam is arranged in the region of a narrow side (13).

2. Multichamber tube according to claim 1, **characterized in that** the position (14', 14", 14"') of the longitudinal wekd seam is variabel.

3. Multichamber tube according to claim 1 or 2, **characterized in that** the tube (1) has a wall strength of s ≤ 0,5 mm, in particular s ≤ 0,25 mm.

4. Multichamber tube according to claim 1, 2 or 3, **characterized in that** the tube has a thickness (outer measure) of d ≤ 2,0 mm.

5. Heat exchanger being provided with a multichamber tube according to one of the preceding claims.

## Revendications

1. Tube à plusieurs chambres (1) réalisé à partir d'une bande plate (2) avec deux côtés longitudinaux plats (10, 11) et deux côtés étroites incurvées (12, 13) et avec traverses (7, 8, 9) pliés de la bande plate (2), séparant des chambres adjacentes (3, 4, 5, 6) et soudés à la paroi intérieure du tube (11'), les traverses (7, 8, 9) n'étant formés qu'à partir d'un seul côté longitudinal (10) du tube à plusieurs chambres (1) et l'autre côté longitudinal (11) étant conçu de façon essentiellement plate, **caractérisé en ce que**
le tube à plusieurs chambres (20) est soudé dans le sens longitudinal et est évasé à son extrémité (21) de façon asymétrique, le côté longitudinal (30) muni des traverses pliés (26, 27, 28) restant essentiellement non déformé dans la zone de l'extrémité du tube, et une soudure longitudinale (14) étant disposée dans la zone d'un côté étroite (13).

2. Tube à plusieurs chambres selon la revendication 1, **caractérisé en ce que** la position (14', 14", 14"') de la soudure longitudinale est variable.

3. Tube à plusieurs chambres selon la revendication 1 ou 2, **caractérisé en ce que** le tube (1) présente une épaisseur de paroi de s ≤ 0,5 mm, en particulier s ≤ 0,25 mm.

4. Tube à plusieurs chambres selon la revendication 1, 2 ou 3, **caractérisé en ce que** le tube présente une épaisseur (encombrement) de d ≤ 2,0 mm.

5. Echangeur de chaleur équipé d'un tube à plusieurs chambres selon l'une quelconque des revendications précédentes.
